# EUROPEAN PATENT APPLICATION

(11) **EP 4 394 953 A1**
(43) Date of publication of application: **03.07.2024**
(21) Application number: 23220545.0
(22) Date of filing: 28.12.2023
(51) Int. Cl.: H01M 4/66, H01M 10/0567, H01M 10/0569, H01M 10/0525, H01M 10/42, H01M 4/131, H01M 4/04

(54) **ELECTROCHEMICAL APPARATUS AND ELECTRONIC APPARATUS**

(30) Priority: 30.12.2022 CN 202211731967
(71) Applicant: Dongguan Amperex Technology Limited, Dongguan City, Guangdong Province 523000 (CN)
(72) Inventor: SUN, Zhenhe, Dongguan City, Guangdong Province, People s Republic of China, 523000 (CN); WANG, Xiang, Dongguan City, Guangdong Province, People s Republic of China, 523000 (CN); WANG, Rui, Dongguan City, Guangdong Province, People s Republic of China, 523000 (CN); ZHONG, Songcai, Dongguan City, Guangdong Province, People s Republic of China, 523000 (CN)
(74) Representative: Icosa

(57) **Abstract**

An electrochemical apparatus includes a positive electrode plate, a negative electrode plate, and a separator disposed between the positive electrode plate and the negative electrode plate. The positive electrode plate includes a positive electrode current collector and a positive electrode active substance layer disposed on a surface of the positive electrode current collector, the positive electrode current collector includes a silicon element, and based on a mass of the positive electrode current collector, a mass content of the silicon element is a%. The electrochemical apparatus further includes an electrolyte, the electrolyte includes a fluorinated solvent and an imine compound, based on a mass of the electrolyte, a mass content of the fluorinated solvent is b% and a mass content of the imine compound is c%. The electrochemical apparatus satisfies: 0<a/c< 1 and 0<b/c<80. Cycling performance and high temperature storage performance of the electrochemical apparatus of this application are significantly improved.

## Description

### TECHNICAL FIELD

This application relates to the technical field of energy storage, and in particular, to an electrochemical apparatus and an electronic apparatus.

### BACKGROUND

An electrochemical apparatus has features such as high energy density, high operating voltage, and light weight, and therefore, is widely used in an electronic product such as a mobile phone, a notebook computer, and a camera. While improving electrochemical performance of the electrochemical apparatus, safety performance of the electrochemical apparatus also needs to be focused on. As requirements for performance of the electronic product increase, requirements for performance of the electrochemical apparatus also gradually increase.

It has been found through research that the electrochemical apparatus includes a positive electrode plate including a positive electrode current collector, and an electrolyte, the exposed positive electrode current collector may have a side reaction with the electrolyte, and a product resulting from the side reaction is attached to the positive electrode current collector, which may deteriorate cycling performance and high temperature storage performance of the electrochemical apparatus.

### SUMMARY

This application provides an electrochemical apparatus and an electronic apparatus. Cycling performance and high temperature storage performance of the electrochemical apparatus are significantly improved.

According to a first aspect, this application provides an electrochemical apparatus. The electrochemical apparatus includes a positive electrode plate, a negative electrode plate, and a separator disposed between the positive electrode plate and the negative electrode plate. The positive electrode plate includes a positive electrode current collector and a positive electrode active substance layer disposed on a surface of the positive electrode current collector, the positive electrode current collector includes a silicon element, and based on a mass of the positive electrode current collector, a mass content of the silicon element is a%. The electrochemical apparatus further includes an electrolyte, the electrolyte includes a fluorinated solvent and an imine compound, based on a mass of the electrolyte, a mass content of the fluorinated solvent is b% and a mass content of the imine compound is c%. The electrochemical apparatus satisfies: 0<a/c<1 and0<b/c<80.

According to any one of embodiments of the first aspect of this application, the electrochemical apparatus further satisfies: 0.3<a/c<0.7, and/or 15≤b/c≤65.

According to any one of embodiments of the first aspect of this application, the electrochemical apparatus further satisfies: 0<a×b/c<10; and preferrably, 1≤a×b/c≤9.

According to any one of embodiments of the first aspect of this application, the electrochemical apparatus satisfies at least one of conditions (1) to (3): (1) 0.03<a<0.18, and preferrably, 0.06≤a≤0.15; (2) 0.10≤b≤50, and preferrably, 3≤b≤30; or (3) 0.1≤c≤5.0, and preferrably, 0.8≤c≤4.0.

According to any one of embodiments of the first aspect of this application, the fluorinated solvent includes a fluorocarbonate and/or a fluorocarboxylate, where preferrably, the fluorocarbonate includes at least one of fluoroethylene carbonate, fluoropropylene carbonate, diethyl fluorocarbonate, difluoroethylene carbonate, bis(trifluoromethyl) carbonate, carbonic acid bis(pentafluoroethyl) carbonate, or bis(2,2,2-trifluoroethyl) carbonate; and the fluorocarboxylate includes at least one of methyl fluoroformate, ethyl fluoroformate, ethyl fluoroacetate, or propyl fluoroacetate.

According to any one of embodiments of the first aspect of this application, the imine compound includes an organoimine compound and a salt thereof; and
the organoimine compound and the salt thereof include a compound shown in formula (I) and a salt thereof:
   b) 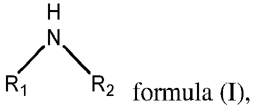 where
   in formula (I), R₁ and R₂ are each independently selected from substituted or unsubstituted C1-C10 chain or cyclic alkyl, substituted or unsubstituted C2-C10 chain or cyclic alkenyl, substituted or unsubstituted C2-C10 chain or cyclic alkynyl, or substituted or unsubstituted C1-C10 acyl or sulfonyl; and when substitution is performed, a substituent is a halogen atom; and/or
the organoimine compound and the salt thereof include a compound shown in formula (II):
   c) 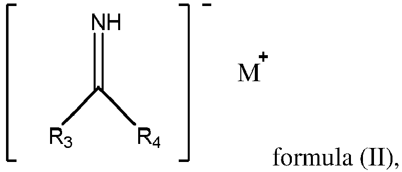 where
   in formula (II), R₃ and R₄ are each independently selected from substituted or unsubstituted alkyl, or substituted or unsubstituted cyclic alkyl, and when substitution is performed, a substituent is a halogen atom, where preferrably, R₃ and R₄ are each independently selected from substituted or unsubstituted C₁ to C₂₀ alkyl, or substituted or unsubstituted C₁ to C₂₀ cyclic alkyl; and M is selected from an alkali metal atom, where preferrably, M is selected from a sodium atom, a lithium atom, or a potassium atom.

According to any one of embodiments of the first aspect of this application, the organoimine compound and the salt thereof include at least one of bis(trifluoromethane)sulfonimide, trifluoromethanesulfonamide, N,N-bis(pentafluoroethanesulfonyl)imide, dimethanesulfonamide, bistrifluoroacetamide, 2,2,2-trifluoro-N-(2,2,2-trifluoroethyl)acetamide, 2,2,2-trifluoro-N-(1-methylethyl)acetamide, 2,2,2-trifluoro-N-isopropylacetamide, magnesium bis(trifluoromethanesulfonyl)imide, or 2-(trifluoroacetamido)ethanamine hydrochloride; and/or the organoimine compound and the salt thereof include at least one of lithium bis(fluorosulfonyl)imide LiN(SO₂F₂)₂, lithium bis(trifluoromethanesulphonyl)imideLiN(SO₂CF₃)₂, lithium bis(trifluoromethylsulfonyl)imide LiN(CF₃SO₂)₂, or lithium bis(fluorophosphate)imide LiN(POF₂)₂.

According to any one of embodiments of the first aspect of this application, the electrolyte includes a fluorine-containing lithium salt, and the fluorine-containing lithium salt includes at least one of lithium hexafluorophosphate (LiPF₆), lithium bis(trifluoromethylsulfonyl)imide (LiTFSI), or lithium bis(fluorosulfonyl)imide (LiFSI).

According to any one of embodiments of the first aspect of this application, a molar concentration of the fluorine-containing lithium salt is noted as N mol/L, where 0.8≤N≤1.4; and preferrably, 1.0≤N≤1.3.

According to any one of embodiments of the first aspect of this application, the positive electrode active substance layer is disposed on one surface of a positive electrode current collector.

According to any one of embodiments of the first aspect of this application, the positive electrode active substance layer is disposed on two surfaces, opposite to each other in a thickness direction of the positive electrode current collector, and the positive electrode active substance layer covers a part of the two surfaces.

According to any one of embodiments of the first aspect of this application, the two surfaces include a first surface and a second surface, the positive electrode active substance layer is disposed on the first surface, and the positive electrode active substance layer is disposed on a part of the second surface, where an area of a part, not covered by the positive electrode active substance layer, of the second surface is noted as S₁ in a unit of µm²; an area of a part, covered by the positive electrode active substance layer, of the second surface is noted as S₂ in a unit of µm²; and the electrochemical apparatus satisfies: S₁/S₂≥0.03, and preferrably, 0.05≤S₁/S₂≤0.1.

According to a second aspect, this application provides an electronic apparatus. The electronic device includes the electrochemical apparatus according to any one of embodiments of the first aspect of this application.

When the electrochemical apparatus according to embodiments of this application includes a silicon element and a fluorinated solvent, the silicon element and the fluorinated solvent have a side reaction to generate a silicon-containing product, an imine compound is introduced into an electrolyte, and the imine compound can dissolve the silicon-containing product, so that a risk of local enrichment of the silicon-containing product on a positive electrode current collector is reduced, and overall interface performance of a positive electrode plate is improved, thereby improving cycling performance and high temperature storage performance of the electrochemical apparatus. In particular, in this application, when 0<a/c<1 and 0<b/c<80 are satisfied, the imine compound can basically dissolve the silicon-containing product attached to the positive electrode current collector in the electrolyte, so that the risk of local enrichment of the silicon-containing product on the positive electrode current collector is further reduced, thereby further improving the cycling performance and the high temperature storage performance of the electrochemical apparatus.

### BRIEF DESCRIPTION OF DRAWINGS

The features, advantages, and technical effects of exemplary embodiments of this application will be described below with reference to the accompanying drawings.
FIG. 1 is a schematic structural diagram of a positive electrode plate of an electrochemical apparatus according to an embodiment of this application; and
FIG. 2 is a schematic structural diagram of a positive electrode plate of an electrochemical apparatus according to another embodiment of this application.

The accompanying drawings may not necessarily be drawn to actual scale.

Reference numerals in the figures:
10: Positive electrode current collector; and 20: Positive electrode active substance layer.

### DETAILED DESCRIPTION

Embodiments of this application will be described in detail below. Throughout the specification of this application, identical or similar components and components having identical or similar functions are represented based on similar reference numerals. Embodiments described herein with respect to the accompanying drawings are illustrative, diagrammatic, and intended to provide a basic understanding of this application. Embodiments of this application should not be explained as a limitation of this application.

In addition, quantities, ratios, and other values are sometimes presented herein in a range format. It should be understood that such range formats are used for convenience and brevity, and it should be flexibly understood that such range formats not only include values explicitly designated as limitations of a range, but also include all individual values or subranges in the range as if each value and subrange were explicitly designated.

In specific implementations and claims, a list of items listed by the terms "at least one of", "at least one pieces of", "at least one types of", or other similar terms may imply any combination of the items listed. For example, if items A and B are listed, the phrase "at least one of A and B" implies A only; B only; or A and B. In another example, if items A, B, and C are listed, then the phrase "at least one of A, B, and C" means A only; B only; C only; A and B (excluding C); A and C (excluding B); B and C (excluding A); or all of A, B, and C. Item A may include a single component or a plurality of components. Item B may include a single component or a plurality of components. Item C may include a single component or a plurality of components.

The term "chain alkyl" covers both straight and branched alkyl. For example, the chain alkyl may be C₁ to C₅₀ alkyl, C₁ to C₄₀ alkyl, C₁ to C₃₀ alkyl, C₁ to C₂₀ alkyl, C₁ to C₁₂ alkyl, C₁ to C₁₀ alkyl, C₁ to C₆ alkyl, or C₁ to C₄ alkyl. In some embodiments, the chain alkyl includes methyl, ethyl, propyl, isopropyl, butyl, isobutyl, tert-butyl, pentyl, hexyl, heptyl, octyl, and the like. In addition, the chain alkyl may be optionally substituted.

The term "cyclic alkyl" means that three or more carbon atoms form a cyclic structure. For example, the cyclic alkyl may be C₃ to C₅₀ cyclic alkyl, C₃ to C₄₀ cyclic alkyl, C₃ to C₃₀ cyclic alkyl, C₃ to C₂₀ cyclic alkyl, C₃ to C₁₂ cyclic alkyl, C₃ to C₁₀ cyclic alkyl, C₃ to C₆ cyclic alkyl, or C₃ and C₄ cyclic alkyl. In some embodiments, the cyclic alkyl includes cyclic propyl, cyclic isopropyl, cyclic butyl, cyclic isobutyl, cyclic tert-butyl, cyclic pentyl, cyclic hexyl, cyclic heptyl, cyclic octyl, and the like. In addition, the cyclic alkyl may be optionally substituted.

The term "chainalkenyl" covers both straight and branched alkenyl. For example, the chain alkenyl may be C₂ to C₅₀ alkenyl, C₂ to C₄₀ alkenyl, C₂ to C₃₀ alkenyl, C₂ to C₂₀ alkenyl, C₂ to C₁₂ alkenyl, C₂ to C₁₀ alkenyl, C₂ to C₆ alkenyl, and C₂ to C₄ alkenyl. In some embodiments, the chain alkenyl includes vinyl, propenyl, butenyl, isobutenyl, pentenyl, hexenyl, heptenyl, octenyl, and the like. In addition, the chain alkenyl may be optionally substituted.

The term "cyclic alkenyl" means that three or more carbon atoms form a cyclic structure with a double bond. For example, the cyclic alkenyl may be C₃ to C₅₀ cyclic alkenyl, C₃ to C₄₀ cyclic alkenyl, C₃ to C₃₀ cyclic alkenyl, C₃ to C₂₀ cyclic alkenyl, C₃ to C₁₂ cyclic alkenyl, C₃ to C₁₀ cyclic alkenyl, C₃ to C₆ cyclic alkenyl, and C₃ and C₄ cyclic alkenyl. In some embodiments, the cyclic alkenyl includes cyclic vinyl, cyclic propenyl, cyclic butenyl, cyclic isobutenyl, cyclic pentenyl, cyclic hexenyl, cyclic heptenyl, cyclic octenyl, and the like. In addition, the cyclic alkenyl may be optionally substituted.

The term "chain alkynyl" covers both straight and branched alkynyl. For example, the alkynyl may be C₂ to C₅₀ alkynyl, C₂ to C₄₀ alkynyl, C₂ to C₃₀ alkynyl, C₂ to C₂₀ alkynyl, C₂ to C₁₂ alkynyl, C₂ to C₁₀ alkynyl, C₂ to C₆ alkynyl, and C₂ to C₄ alkynyl. In some embodiments, the chain alkynyl includes ethynyl, propynyl, butynyl, isobutynyl, pentynyl, hexynyl, heptynyl, octynyl, and the like. In addition, the alkynyl may be optionally substituted.

The term "cyclic alkynyl" means that three or more carbon atoms form a cyclic structure with a triple bond. For example, the cyclic alkynyl may be C₃ to C₅₀ cyclic alkynyl, C₃ to C₄₀ cyclic alkynyl, C₃ to C₃₀ cyclic alkynyl, C₃ to C₂₀ cyclic alkynyl, C₃ to C₁₂ cyclic alkynyl, C₃ to C₁₀ cyclic alkynyl, C₃ to C₆ cyclic alkynyl, C₃ to C₆ cyclic alkynyl, and C₃ and C₄ cyclic alkynyl. In some embodiments, the cyclic alkynyl includes cyclic ethynyl, cyclic propynyl, cyclic butynyl, cyclic isobutynyl, cyclic pentynyl, cyclic hexynyl, cyclic heptynyl, cyclic octynyl, and the like. In addition, the cyclic alkynyl may be optionally substituted.

The term "acyl" refers to a group of atoms remaining after removal of one or more hydroxyl from an organic or inorganic oxyacid. For example, the acyl may be C₁ to C₅₀ acyl, C₁ to C₄₀ acyl, C₁ to C₃₀ acyl, C₁ to C₂₀ acyl, C₁ to C₁₂ acyl, C₁ to C₁₀ acyl, C₁ to C₈ acyl, C₁ to C₅ acyl, and C₂ to C₆ acyl. In some embodiments, the acyl may include formyl, acetyl, propionyl, butyryl, isobutyryl, sec-butyryl, tert-butyryl, cyclic butyryl, valeryl, isovaleryl, pivaloyl, tert-pentyl, and cyclic pentyl. In addition, the acyl may be optionally substituted.

The term "sulfonyl" refers to a group of atoms remaining after removal of one or more hydroxyl from a sulfonic acid. For example, the sulfonyl acyl may be C₁ to C₅₀ sulfonyl acyl, C₁ to C₄₀ sulfonyl acyl, C₁ to C₃₀ sulfonyl acyl, C₁ to C₂₀ sulfonyl acyl, C₁ to C₁₂ sulfonyl acyl, C₁ to C₁₀ sulfonyl acyl, C₁ to C₈ sulfonyl acyl, C₁ to C₅ sulfonyl acyl, and C₂ to C₆ sulfonyl acyl. In some embodiments, the sulfonyl acyl may include methylsulfonyl, ethylsulfonyl, propylsulfonyl, butylsulfonyl, isobutylsulfonyl, sec-butylsulfonyl, tert-butylsulfonyl, cyclic butylsulfonyl, pentylsulfonyl, isopentylsulfonyl, pivaloylsulfonyl, tert-pentylsulfonyl, and cyclic pentylsulfonyl. In addition, the sulfonyl acyl may be optionally substituted.

The term "halogen atom" means a fluorine atom, a chlorine atom, a bromine atom, and the like.

Throughout this specification, substituents of a compound are disclosed in groups or ranges. It is expressly contemplated that the description includes each individual subcombinations of members of these groups and ranges. For example, it is expressly contemplated that the term "C₁ to C₈ alkyl" individually discloses C₁, C₂, C₃, C₄, C₅, C₆, C₇, C₈, C₁ to C₈, C₁ to C₇, C₁ to C₆, C₁ to C₅, C₁ to C₄, C₁ to C₃, C₁ and C₂, C₂ to C₈, C₂ to C₇, C₂ to C₆, C₂ to C₅, C₂ to C₄, C₂ and C₃, C₃ to C₈, C₃ to C₇, C₃ to C₆, C₃ to C₅, C₃ and C₄, C₄ to C₈, C₄ to C₇, C₄ to C₆, C₄ and C₅, C₅ to C₈, C₅ to C₇, C₅ and C₆, C₆ to C₈, C₆ and C₇, and C₇ and C₈ alkyl.

In other examples, it is expressly contemplated that integers ranging from 5 to 40 individually disclose 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40; and it is expressly contemplated that integers ranging from 1 to 20 individually disclose 1, 2, 3, 4, 5, 6, 7, 8, 9, 10, 11, 12, 13, 14, 15, 16, 17, 18, 19, and 20. Accordingly, other groups or ranges can be expressly contemplated.

When the above groups is substituted, a substituent group may include the halogen atom.

An electrochemical apparatus includes a positive electrode plate. The positive electrode plate includes a positive electrode active substance layer and a positive electrode current collector (such as aluminum foil). When the aluminum foil is assembled as an integral part of the positive electrode plate, the aluminum foil may have a partially exposed region, where the partially exposed region is a region not covered by the positive electrode active substance layer. Exemplarily, when the electrochemical apparatus is of a coiled structure, the aluminum foil is partially exposed at the end of the positive electrode plate, and the aluminum foil is exposed at the end of a single-side region of the positive electrode plate.

The fluorinated solvent can form an interfacial film on a surface of a negative electrode plate of the electrochemical apparatus, and protect the negative electrode plate well. In addition, the fluorinated solvent can improve thermal stability of an electrolyte. Therefore, in the related technology, the fluorinated solvent is usually added to the electrolyte. With the improvement of requirements on performance of the electrochemical apparatus, a voltage system of the electrochemical apparatus constantly increases, and additives of the fluorinated solvent increase accordingly. With the increase in content of the fluorinated solvent, there is a rising risk of a side reaction between the fluorinated solvent and a silicon element.

The inventor finds that the aluminum foil inevitably carries the silicon element during a production process, and it is easy for the silicon element to have the side reaction with the fluorinated solvent that is in the electrolyte, and a product generated in the side reaction may be attached to the positive electrode current collector. Consequently, de-intercalation of active ions from the positive electrode plate is affected, and local plating of the active ions on the positive electrode plate is caused, which deteriorates cycling performance and high temperature storage performance of the electrochemical apparatus. In a severe situation, the electrochemical apparatus may fail to cycle.

In view of this, the inventor of this application provides an electrochemical apparatus. Constituents of the electrolyte are adjusted, to reduce a risk of enrichment of the product, generated in the reaction between the silicon element and the fluorinated solvent, on the positive electrode current collector, thereby improving the cycling performance and the high temperature storage performance of the electrochemical apparatus.

The technical solutions of this application are described in detail below.

### Electrochemical apparatus

A first aspect of this application provides an electrochemical apparatus. The electrochemical apparatus includes an electrolyte, a positive electrode plate, a negative electrode plate, and a separator disposed between the positive electrode plate and the negative electrode plate. The positive electrode plate includes a positive electrode current collector and a positive electrode active substance layer disposed on a surface of the positive electrode current collector, the positive electrode current collector includes a silicon element, and based on a mass of the positive electrode current collector, a mass content of the silicon element is a%. The electrolyte includes a fluorinated solvent and an imine compound. Based on a mass of the electrolyte, a mass content of the fluorinated solvent is b% and a mass content of the imine compound is c%. The electrochemical apparatus satisfies: 0<a/c< 1 and 0<b/c<80.

It should be noted that when the positive electrode active substance layer is disposed on the positive electrode current collector, a part of a surface of the positive electrode current collector may not be covered by the positive electrode active substance layer, the uncovered part of the positive electrode current collector has an exposed surface, and the silicon element included in the part of the positive electrode current collector may be in direct contact with the electrolyte. When the electrochemical apparatus includes the silicon element and the fluorinated solvent, the silicon element and the fluorinated solvent have a side reaction to generate a silicon-containing product, the imine compound is introduced into the electrolyte, and the imine compound can dissolve the silicon-containing product, so that a risk of local enrichment of the silicon-containing product on the positive electrode current collector is reduced, and overall interface performance of the positive electrode plate is improved, thereby enhancing cycling performance and high temperature storage performance of the electrochemical apparatus. In particular, in this application, when 0<a/c<1 and 0<b/c<80 are satisfied, the imine compound can basically dissolve the silicon-containing product attached to the positive electrode current collector in the electrolyte, so that the risk of local enrichment of the silicon-containing product on the positive electrode current collector is further reduced, thereby further enhancing the cycling performance and the high temperature storage performance of the electrochemical apparatus. Preferrably, 0.3≤a/c≤0.7. In this case, the electrochemical apparatus may have better cycling performance and high temperature storage performance. Preferrably, 15≤b/c≤65. In this case, the electrochemical apparatus may have better cycling performance and high temperature storage performance.

Exemplarily, a/c may be 0.1, 0.2, 0.3, 0.4, 0.5, 0.6, 0.7, 0.8, 0.9, or any value in a range including any two of the above values.

Exemplarily, b/c may be 1, 2, 5, 8, 10, 15, 18, 20, 22, 25, 30, 35, 40, 45, 50, 60, 65, 70, 75, 80, or any value in a range including any two of the above values.

In some embodiments, the electrochemical apparatus further satisfies: 0<a×b/c<10. When the contents of the imine compound, the fluorinated solvent, and the silicon element satisfy the above range, the imine compound can further dissolve the silicon-containing product in the electrolyte, thereby further enhancing the cycling performance and the high temperature storage performance of the electrochemical apparatus. Preferrably, 1≤a×b/c≤9. In this case, the electrochemical apparatus may have better cycling performance and high temperature storage performance. Exemplarily, a×b/c may be 0.2, 0.5, 1, 1.5, 1.8, 2.5, 3.0, 4.0, 4.5, 6.0, 7.0, 8.0, 9.0, 9.8, or any value in a range including any two of the above values.

The inventor further finds, through research, that the cycling performance and the high temperature storage performance of the electrochemical apparatus can be further improved when the electrochemical apparatus further satisfies at least one of the following conditions.

In some embodiments, 0.03≤a≤0.18. When the mass content of the silicon element is in the above range, the risk of the side reaction between the silicon element and the fluorinated solvent can be reduced. Preferrably, 0.06≤a≤0.15. In this case, the electrochemical apparatus may have better cycling performance and high temperature storage performance. Exemplarily, the mass content a% of the silicon element may be 0.03%, 0.05%, 0.06%, 0.08%, 0.10%, 0.12%, 0.15%, 0.17%, 0.18%, or any value in a range including any two of the above values.

In some embodiments, 0.10≤b≤50. When the mass content of the fluorinated solvent is in the above range, the fluorinated solvent and the silicon element may have the side reaction to a specific extent, but a degree of the side reaction is low, which is conducive to lowering generation of the silicon-containing product. In addition, the fluorinated solvent can form a dense and uniform solid electrolyte interface (SEI) film on the negative electrode plate, to protect the negative electrode plate well. Preferrably, 3≤b≤30. In this case, the electrochemical apparatus may have better cycling performance and high temperature storage performance. Exemplarily, the mass content b% of the fluorinated solvent may be 0.10%, 0.50%, 1%, 2%, 3%, 4%, 5%, 8%, 10%, 12%, 15%, 18%, 20%, 25%, 30%, 35%, 40%, 45%, 50%, or any value in a range including any two of the above values.

In some embodiments, 0.1≤c≤5.0. When the mass content of the imine compound is in the above range, the imine solvent can fully dissolve the silicon-containing product in the electrolyte, so as to reduce a risk of local plating of active ions, for example, local lithium plating, caused by local enrichment of the silicon-containing product on the positive electrode current collector, thereby enhancing the cycling performance and the high temperature storage performance of the electrochemical apparatus. Preferrably, 0.8≤c≤4.0. In this case, the electrochemical apparatus may have better cycling performance and high temperature storage performance. Exemplarily, the mass content c% of the imine compound may be 0.1%, 0.5%, 0.8%, 1.1%, 2.2%, 3%, 3.5%, 4%, 5%, or any value in a range including any two of the above values.

The inventor further finds, through research, that the cycling performance and the high temperature storage performance of the electrochemical apparatus can be further improved by specific selection of types of the fluorinated solvent and the imine compound.

In some embodiments, the fluorinated solvent may include fluorocarbonate and/or fluorocarboxylate.

Exemplarily, the fluorocarbonate includes at least one of fluoroethylene carbonate, fluoropropylene carbonate, diethyl fluorocarbonate, difluoroethylene carbonate, bis(trifluoromethyl) carbonate, carbonic acid bis(pentafluoroethyl) carbonate, or bis(2,2,2-trifluoroethyl) carbonate.

Exemplarily, the fluorocarboxylate includes at least one of methyl fluoroformate, ethyl fluoroformate, ethyl fluoroacetate, or propyl fluoroacetate.

In some embodiments, the imine compound includes an organoimine compound and a salt thereof, that is, the imine compound includes an organoimine compound and/or an organoimine salt.

In some examples, the organoimine compound and the salt thereof may include a compound shown in formula (I) and a salt thereof:
d) 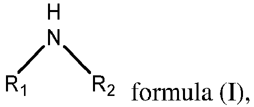 where
in formula (I), R₁ and R₂ are each independently selected from substituted or unsubstituted C₁ to C₁₀ chain or cyclic alkyl, substituted or unsubstituted C₂ to C₁₀ chain or cyclic alkenyl, substituted or unsubstituted C₂ to C₁₀ chain or cyclic alkynyl, or substituted or unsubstituted C₁ to C₁₀ acyl or sulfonyl; and when substitution is performed, a substituent is a halogen atom.

Exemplarily, the organoimine compound includes at least one of bis(trifluoromethane)sulfonimide (CAS: 82113-65-3), trifluoromethanesulfonamide CAS: 421-85-2), N,N-bis(pentafluoroethanesulfonyl)imide (CAS: 152894-10-5), dimethanesulfonamide (CAS: 5347-82-0), bistrifluoroacetamide (CAS: 407-24-9), 2,2,2-trifluoro-N-(2,2,2-trifluoroethyl)acetamide, 2,2,2-trifluoro-N-(1-methylethyl)acetamide, or 2,2,2-trifluoro-N-isopropylacetamide (CAS: 348-76-5).

Exemplarily, the organoimine salt includes magnesium bis(trifluoromethanesulfonyl)imide (CAS: 1019840-54-0) and/or 2-(trifluoroacetamido)ethanamine hydrochloride (CAS: 5458-14-0).

In other examples, the organoimine compound and the salt thereof may include a compound shown in formula (II):
e) 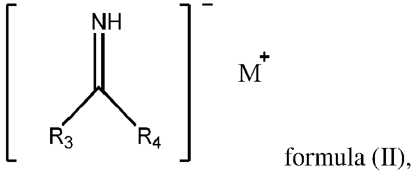 where
in formula (II), R₃ and R₄ are each independently selected from substituted or unsubstituted alkyl, or substituted or unsubstituted cyclic alkyl, and when substitution is performed, a substituent is a halogen atom, where preferrably, R₃ and R₄ are each independently selected from substituted or unsubstituted C₁ to C₂₀ alkyl, or substituted or unsubstituted C₁ to C₂₀ cyclic alkyl; and M is selected from an alkali metal atom, where preferrably, M is selected from a sodium atom, a lithium atom, or a potassium atom.

Exemplarily, the organoimine compound and the salt thereof include at least one of lithium bis(fluorosulfonyl)imide LiN(SO₂F₂)₂, lithium bis(trifluoromethanesulphonyl)imide (LiN(SO₂CF₃)₂), lithium bis(trifluoromethylsulfonyl)imide (LiN(CF₃SO₂)₂), or lithium bis(fluorophosphate)imide (LiN(POF₂)₂).

In still other examples, the organoimine compound and the salt thereof may include the compound shown in formula (I) and the salt thereof and the compound shown in formula (II).

In some embodiments, the electrolyte further includes an electrolyte salt. The electrolyte salt is an electrolyte salt known in the art for use in the electrochemical apparatus. Suitable electrolyte salts can be selected for different electrochemical apparatuses. For example, for a lithium-ion battery, a lithium salt is usually used as the electrolyte salt.

In some embodiments, the lithium salt includes a fluorine-containing lithium salt, and the fluorine-containing lithium salt includes at least one of lithium hexafluorophosphate (LiPF₆), lithium bis(trifluoromethylsulfonyl)imide (LiTFSI), or lithium bis(fluorosulfonyl)imide (LiFSI). The fluorine-containing lithium salt has excellent ionic conductivity and electrochemical stability, which is favorable for improving dynamics performance and cycling stability of the electrochemical apparatus. However, the fluorine-containing lithium salt may have a side reaction with water in the electrolyte to produce hydrofluoric acid HF, and the HF may also have a side reaction with the silicon element to produce a silicon-containing product. Nevertheless, the imine compound in the electrolyte of this application can dissolve the silicon-containing product in the electrolyte, thereby further improving the cycling performance and the high-temperature storage performance of the electrochemical apparatus.

Further, a molar concentration of the fluorine-containing lithium salt is noted as N mol/L, where 0.8≤N≤1.4. When the molar concentration of the fluorine-containing lithium salt is in the above range, the ionic conductivity and the electrochemical stability of the electrolyte can be improved, and a risk of a side reaction between the fluorine-containing lithium salt and the silicon element can be reduced to a specific extent, thus improving the cycling performance and the high temperature storage performance of the electrochemical apparatus. Preferrably, 1.0≤N≤1.3. In this case, the electrochemical apparatus may have better cycling performance and high temperature storage performance. Exemplarily, the molar concentration N mol/L of the fluorine-containing lithium salt may be 0.8 mol/L, 0.9 mol/L, 1.0 mol/L, 1.2 mol/L, 1.3 mol/L, 1.4 mol/L, or any value in a range including any two of the above values.

In some embodiments, the electrolyte further includes a non-aqueous organic solvent, including a single non-aqueous organic solvent or a mixture of a plurality of non-aqueous organic solvents. When the mixture of solvents is used, a mixing ratio can be controlled based on desired performance of the electrochemical apparatus.

In some embodiments, the electrolyte may further include a carbonate compound, a polynitrile compound, and the like, for improving performance of the electrolyte and facilitating protection for the positive electrode plate and/or the negative electrode plate.

Exemplarily, the carbonate compound includes a linear carbonate compound and/or a cyclic carbonate compound. Exemplarily, the linear carbonate compound includes at least one of ethyl allyl carbonate or diphenyl carbonate, methallyl carbonate, and polycarbonate. Exemplarily, the cyclic carbonate compound includes at least one of vinylene carbonate, ethylene carbonate, propylene carbonate, vinylethylene carbonate, or dioctyl carbonate. Preferrably, the cyclic carbonate compound includes ethylene carbonate and propylene carbonate.

It should be noted that when the electrolyte of this application is tested, the electrolyte may be a freshly prepared electrolyte that is directly obtained or an electrolyte obtained from the electrochemical apparatus. An exemplary method of obtaining the electrolyte from the electrochemical apparatus includes the following step: Discharge the electrochemical apparatus to a discharge cut-off voltage (where the electrochemical apparatus is generally in a fully discharged state for safety) and then perform centrifuging, where liquid obtained through centrifugation is the electrolyte. The electrolyte can alternatively be obtained directly from a liquid injection port of the electrochemical apparatus. A gas chromatography-mass spectromete (GC-MS) test is performed on the electrolyte to obtain a mass content of each constituent through detection.

### [Positive electrode plate]

A positive electrode plate is a positive electrode plate known in the art for use in an electrochemical apparatus. In some embodiments, the positive electrode plate includes a positive electrode current collector and a positive electrode active substance layer. The positive electrode active substance layer is disposed on a surface of the positive electrode current collector. The positive electrode active substance layer includes a positive electrode active substance.

In some embodiments, a structure of the positive electrode plate is a structure of a positive electrode plate known in the art for use in the electrochemical apparatus.

In some embodiments, the positive electrode current collector is a metal, the metal is, for example, aluminum foil, and there is a silicon element in the aluminum foil.

The positive electrode plate has a variety of coating manners, such as positive electrode single-side coating, positive electrode double-side coating, and the like.

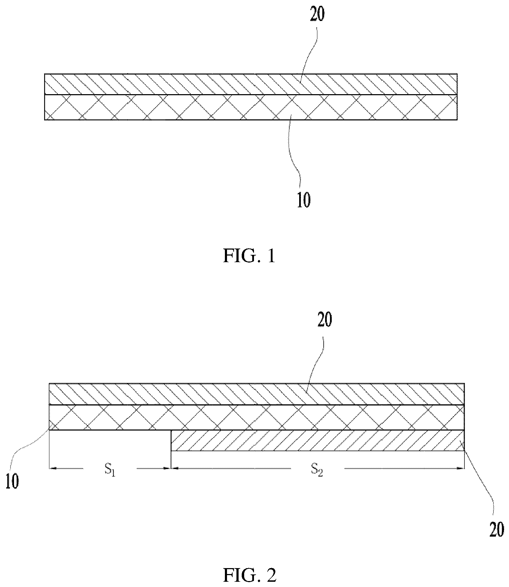

Positive electrode single-side coating: The positive electrode current collector includes two surfaces opposite to each other in a thickness direction of the positive electrode current collector. For example, the two surfaces include a first surface and a second surface. The positive electrode active substance layer may be disposed on one of the two surfaces, for example, the first surface. The other surface, such as the second surface, is an exposed surface. The second surface may be in direct contact with an electrolyte, and there is a risk of a side reaction between a silicon element and a fluorinated solvent in the electrolyte. Alternatively, the positive electrode active substance layer is disposed on only the first surface. But when disposed on the first surface, the positive electrode active substance layer partially covers the first surface, that is, there is still an exposed part of the first surface, and there is a risk of a side reaction caused when the exposed part is in direct contact with the electrolyte. As shown in FIG. 1, a positive electrode active substance layer 20 is disposed on one surface of a positive electrode current collector 10.

Positive electrode both-side coating: The positive electrode current collector includes two surfaces opposite to each other in a thickness direction of the positive electrode current collector. For example, the two surfaces include a first surface and a second surface. The positive electrode active substance layer may alternatively be disposed on both surfaces, and the positive electrode active substance layer may fully cover the first surface and partially cover the second surface. The second surface has an exposed surface, and there is a risk of a side reaction caused when the exposed surface is in direction contact with the electrolyte. Alternatively, the positive electrode active substance layer may partially cover the first surface and partially cover the second surface. There are exposed surfaces on both the first surface and the second surface, and there is a risk of a side reaction caused when the exposed surfaces are in direct contact with the electrolyte. When positive electrode double-side coating is used, positive electrode double-side coating is asymmetric coating, that is, an area of a part, covered by the positive electrode active substance layer, on the first surface is not exactly the same as a surface of a part, covered by the positive electrode active substance layer, on the second surface. Exemplarily, an area (the exposed surface) of a part, not covered by the positive electrode active substance layer, on the second surface is denoted as S₁ in a unit of µm²; and an area of the part, covered by the positive electrode active substance layer, on the second surface is denoted as S₂ in a unit of µm². The electrochemical apparatus satisfies: S₁/S₂≥0.03. Preferrably, 0.05≤S₁/S₂≤0.1. In the above coating manner, an exposed area of the positive electrode current collector is relatively large, a content of an exposed silicon element is relatively high, it is extremely easy to generate a silicon-containing product in a side reaction between the silicon element and the electrolyte, and an imine compound basically can dissolve the silicon-containing product, so that cycling performance and high-temperature storage performance of the electrochemical apparatus are enhanced. As shown in FIG. 2, a positive electrode active substance layer 20 is disposed on both surfaces of a positive electrode current collector 10, and one of the surfaces is partially covered by the positive electrode active substance layer.

The positive electrode active substance may be selected from various conventionally known substances that can achieve reversible intercalation and de-intercalation of active ions and that can be used as a positive electrode active substance in an electrochemical apparatus known in the art. For a lithium-ion battery, the positive electrode active substance usually includes a lithium ion. For a sodium-ion battery, the positive electrode active substance usually includes a sodium ion. The lithium ion is used as an example for description below.

In some embodiments, the positive electrode active substance includes a positive electrode material that can absorb and release lithium, including, but not limited to, lithium cobalt oxide, lithium nickel manganese cobalt oxide, lithium nickel cobalt aluminum oxide, lithium manganate, lithium manganese iron phosphate, lithium vanadium phosphate, lithium vanadium oxide phosphate, lithium iron phosphate, lithium titanate, and lithium-rich manganese-based materials.

In some embodiments, the positive electrode active substance layer further includes a positive electrode binder and a positive electrode conductive agent. The positive electrode binder is used to improve performance of bonding between positive electrode active substance particles and between the positive electrode active substance particle and the current collector. In some embodiments, the positive electrode binder includes at least one of poly(vinyl alcohol), carboxymethyl cellulose, hydroxypropyl cellulose, diacetyl cellulose, poly(vinyl chloride), carboxylated poly(vinyl chloride), poly(vinyl fluoride), a polymer including ethylidene oxygen, polyvinyl pyrrolidone, polyurethane, poly(tetrafluoroethylene), polyvinylidene fluoride, polyethylene, polypropylene, styrene-butadiene rubber, acrylate styrene-butadiene rubber, epoxy resin, and nylon. The positive electrode conductive agent is used to provide conductivity to an electrode, and may include any conductive material as long as the conductive material does not cause a chemical change. In some embodiments, the positive electrode conductive agent includes at least one of natural graphite, artificial graphite, carbon black, acetylene black, Ketjen black, carbon fiber, metal powder, metal fiber, and a polyphenylene derivative. In some embodiments, a metal in the metal powder and the metal fiber includes at least one of copper, nickel, aluminum, and silver.

In some embodiments, a method for preparing the positive electrode plate is a method for preparing a positive electrode plate known in the art for use in an electrochemical apparatus. In some embodiments, in preparation of a positive electrode slurry, a solvent is usually added. A conductive material and a thickener that are added as needed and a binder are added to the positive electrode active substance, and then dissolved or dispersed in the solvent to make the positive electrode slurry. The solvent is volatilized and removed in a drying process. The solvent is a solvent known in the art for use in the positive electrode active substance layer, for example, but not limited to, N-methylpyrrolidone (NMP).

### [Negative electrode plate]

A negative electrode plate is a negative electrode plate known in the art for use in an electrochemical apparatus. In some embodiments, a negative electrode plate includes a negative electrode current collector and a negative electrode active substance layer. The negative electrode active substance layer is disposed on a surface of the negative electrode current collector. The negative electrode active substance layer includes a negative electrode active substance.

In some embodiments, a structure of the negative electrode plate is a structure of a negative electrode plate known in the art for use in the electrochemical apparatus.

In some embodiments, the negative electrode current collector is a metal, such as, but not limited to, copper foil, nickel foil, stainless steel foil, titanium foil, nickel foam, copper foam, a polymer substrate coated with a conductive metal, or a combination thereof.

The negative electrode active substance may be selected from various conventionally known substances that can achieve reversible intercalation and de-intercalation of active ions or conventionally known substance that can be reversibly doped and de-doped with active ions and that can be used as a negative electrode active substance in an electrochemical apparatus known in the art.

In some embodiments, the negative electrode active substance includes at least one of a lithium metal, a lithium metal alloy, a carbon material, a material that can be doped/de-doped with lithium, or a transition metal oxide. In some embodiments, the carbon material may be selected from various carbon materials that can be used as a carbon-based negative electrode active substance in an electrochemical apparatus known in the art. In some embodiments, the carbon material includes at least one of crystalline carbon and amorphous carbon. In some embodiments, the crystalline carbon is natural graphite or artificial graphite. In some embodiments, a shape of the crystalline carbon is an amorphous shape, a plate shape, a small flake shape, a spherical shape, or a fiber shape. In some embodiments, the crystalline carbon is low crystalline carbon or high crystalline carbon. In some embodiments, the low crystalline carbon includes at least one of soft carbon and hard carbon. In some embodiments, the high crystalline carbon includes at least one of natural graphite, crystalline graphite, pyrolytic carbon, mesophase pitch-based carbon fiber, a mesocarbon microbead, mesophase pitch, and high temperature wrought carbon.

In some embodiments, the high temperature wrought carbon is petroleum or coke derived from coal tar pitch. In some embodiments, the amorphous carbon includes at least one of soft carbon, hard carbon, a carbonization product of mesophase pitch, and fired coke. In some embodiments, the negative electrode active substance includes the transition metal oxide. In some embodiments, the transition metal oxide includes at least one of vanadium oxide and lithium vanadium oxide. In some embodiments, the negative electrode active substance includes at least one of Si, SiOx (0<x<2), a Si/C complex, a Si-Q alloy, Sn, SnOz, a Sn-C complex, and a Sn-R alloy, where Q is selected from at least one of an alkali metal, an alkaline earth metal, group 13 elements to group 16 elements, a transition element, and a rare earth element, and Q is not Si; and R is selected from at least one of an alkali metal, an alkaline earth metal, group 13 elements to group 16 elements, a transition element, and a rare earth element, and R is not Sn. In some embodiments, Q and R include at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, and Po.

In some embodiments, the negative electrode active substance layer further includes a negative electrode binder and a negative electrode conductive agent. In some embodiments, the negative electrode binder includes at least one of a difluoroethylene-hexafluoropropylene copolymer (PVDF-co-HFP), polyvinylidene fluoride, polyacrylonitrile, poly(methyl methacrylate), poly(vinyl alcohol), carboxymethyl cellulose, hydroxypropyl cellulose, poly(vinyl chloride), carboxylated poly(vinyl chloride), poly(vinyl fluoride), a polymer including ethylidene oxygen, polyvinyl pyrrolidone, polyurethane, poly(tetrafluoroethylene), polyethylene, polypropylene, styrene-butadiene rubber, acrylate styrene-butadiene rubber, epoxy resin, and nylon. In some embodiments, the negative electrode conductive agent is used to provide conductivity to an electrode, and may include any conductive material as long as the conductive material does not cause a chemical change. In some embodiments, the negative electrode conductive agent includes any one of a carbon-based material, a metal-based material, a conductive polymer, or a mixture thereof. In some embodiments, the carbon-based material includes at least one of natural graphite, artificial graphite, carbon black, acetylene black, Ketjen black, and carbon fiber. In some embodiments, the metal-based material includes at least one of metal powder or metal fiber of copper, nickel, aluminum, silver, and the like. In some embodiments, the conductive polymer includes a polyphenylene derivative.

In some embodiments, a method for preparing the negative electrode plate is a method for preparing a negative electrode plate known in the art for use in an electrochemical apparatus. In some embodiments, in preparation of a negative electrode slurry, a solvent is usually added. A conductive material and a thickener that are added as needed and a binder are added to the negative electrode active substance, and then dissolved or dispersed in the solvent to make the negative electrode slurry. The solvent is volatilized and removed in a drying process. The solvent is a solvent known in the art for use in the negative electrode active substance layer, for example, but not limited to, water. The thickener is a thickener known in the art for use in the negative electrode active substance layer, for example, but not limited to, sodium carboxymethyl cellulose.

This application constitutes no particular limitations on a mixing ratio of the negative electrode active substance, the binder, and the thickener in the negative electrode active substance layer, and the mixing ratio can be controlled based on desired performance of the electrochemical apparatus.

### [Separator]

A separator is a separator known in the art for use in an electrochemical apparatus, for example, but not limited to, a polyolefin microporous membrane. In some embodiments, the separator includes at least one of polyethylene (PE), an ethylenepropylene copolymer, polypropylene (PP), an ethylene-butene copolymer, an ethylene-hexene copolymer, and an ethylene-methyl methacrylate copolymer.

In some embodiments, the separator is a single-layer separator or a multi-layer separator.

In some embodiments, the separator is coated with a coating. In some embodiments, the coating includes at least one of an organic coating and an inorganic coating, where the organic coating is selected from at least one of polyvinylidene fluoride, a vinylidene fluoride-hexafluoropropylene copolymer, polyacrylonitrile, polyimide, an acrylonitrile-butadiene copolymer, an acrylonitrile-styrene-butadiene copolymer, poly(methyl methacrylate), poly(methyl acrylate), poly(ethyl acrylate), an acrylic acid-styrene copolymer, poly(dimethylsiloxane), sodium polyacrylate, and sodium carboxymethyl cellulose, and the inorganic coating is selected from at least one of SiO₂, Al₂O₃, CaO, TiO₂, ZnO₂, MgO, ZrO₂, and SnO₂.

This application constitutes no particular limitations on the morphology and thickness of the separator. A method for preparing the separator is a method for preparing the separator known in the art for use in the electrochemical apparatus.

### Electronic apparatus

Based on the same inventive concept, this application further provides an electronic apparatus.

The electronic apparatus of this application is any electronic apparatus such as, but not limited to, a laptop computer, a pen-input computer, a mobile computer, an e-book player, a portable telephone, a portable fax, a portable photocopier, a portable printer, a head-mounted stereo headset, a video tape recorder, a liquid crystal display television, a handheld cleaner, a portable CD player, a minidisc, a transceiver, an electronic notebook, a calculator, a memory card, a portable tape recorder, a radio, a back-up power supply, an electric motor, an automobile, a motorcycle, a power-assisted bicycle, a bicycle, a lighting apparatus, a toy, a game console, a clock, an electronic tool, a flashing light, a camera, a large storage battery for household use, or a lithium-ion capacitor. It should be noted that the electrochemical apparatus of this application is applicable to an energy storage power station, a marine transportation carrier, and an air transportation carrier in addition to the above example electronic apparatuses. An air transportation carrier apparatus includes an air transportation carrier apparatus within the atmosphere and an air transportation carrier apparatus outside the atmosphere.

In some embodiments, the electronic apparatus includes the foregoing electrochemical apparatus in this application.

The technical solutions of this application are further described below by using a lithium-ion battery as an example and with reference to comparative embodiments and embodiments, but are not limited thereto. Persons skilled in the art understand that the preparation method described in this application is only an example embodiment, and any modification or substitution of the technical solutions of this application without departing from the scope of the technical solutions of this application shall fall within the protection scope of this application.

Reagents, materials, and apparatuses used in the following embodiments and comparative embodiments can be obtained commercially or synthetically unless otherwise stated.

### Embodiment

Performance evaluation is performed based on an embodiment and a comparative embodiment of a lithium-ion battery according to this application in the following descriptions.

### Embodiment and comparative embodiment

### Preparation of the lithium-ion battery

### (1) Preparation of a positive electrode plate

Lithium cobalt oxide (LiCoO₂), a conductive material (Super-P), and polyvinylidene fluoride (PVDF) are fully stirred and mixed in an appropriate amount of N-methylpyrrolidone (NMP) solvent in a mass ratio of 96:2:2 to form a uniform positive electrode slurry. The positive electrode slurry is coated on aluminum foil of a positive electrode current collector, dried, and cold pressed, to obtain a positive electrode active substance layer. The positive electrode active substance layer and the positive electrode current collector form the positive electrode plate. A coating manner of the positive electrode slurry is shown in Table 1.

### (2) Preparation of a negative electrode plate

A negative electrode active substance of artificial graphite, a binder of poly(acrylic acid), and a thickener of sodium carboxymethyl cellulose (CMC) are fully stirred and mixed in an appropriate amount of deionized water solvent in a weight ratio of 83.5:15:1.5 to form a uniform negative electrode slurry. The negative electrode slurry is coated on copper foil of a negative electrode current collector, dried, and cold pressed, to obtain the negative electrode plate.

### (3) Preparation of an electrolyte

In an argon atmosphere glove box with a water content <10 ppm, ethylene carbonate (EC), propylene carbonate (PC), and diethyl carbonate (DEC) are uniformly mixed as a non-aqueous solvent in a mass ratio of 1:1:1, then a fully dried lithium salt LiPF₆ is dissolved in the above non-aqueous solvent, and additives (succinonitrile SN, gamma-Butyrolactone GBL, and the like) with a specific mass are added to form the electrolyte. The additives are shown in Table 2.

### (4) Preparation of a separator

A polyethylene (PE) porous polymer thin film is used as the separator.

### (5) Preparation of the lithium-ion battery

The positive electrode plate, the separator, and the negative electrode plate are stacked in order, so that the separator is located between the positive electrode plate and the negative electrode plate for isolation. Then, a tab is welded, and coiling is performed, to obtain an electrode assembly. The electrode assembly is placed in an outer packaging foil aluminum-plastic film, and the foregoing prepared electrolyte is injected. A soft pack lithium-ion battery is obtained through processes such as vacuum encapsulation, standing, formation, shaping, and capacity testing.

### Test method:

### 1. Positive electrode plate abnormality detection

A cycled lithium-ion battery is disassembled, and an abnormal region of a positive electrode plate is observed. The abnormal region of the positive electrode plate is cut out for an EDS elemental analysis test. If a content of a Si element >2%, it is determined that there is abnormality in the positive electrode plate (the lithium-ion battery fails), and the content of the Si element can be obtained.

EDS test procedure: The to-be-observed region of the positive electrode plate is attached to a sample stage by using a conductive adhesive, and the to-be-observed region is marked in advance. After a surface is cleaned, the to-be-observed region is pushed into a scanning electron microscope sample compartment, and preparation before observation is made. After equipment preparation is completed, three or more abnormal regions may be randomly selected from suspected abnormal regions, Si contents corresponding to the selected regions can be obtained, an average value is calculated, and a level of a silicon content of the sample is obtained.

### 2. Test method of lithium-ion battery 85degC storage

(1) A voltage of a lithium-ion battery is adjusted to 3.8 V-3.9 V, and a thickness T1 of the lithium-ion battery subjected to voltage adjustment is tested.
(2) The lithium-ion battery is charged to a rated voltage at a current of 0.2 C (where C is a rated capacity of the lithium-ion battery), and then is charged at a constant voltage with a cutoff current of 0.05 C.
(3) The lithium-ion battery is placed in an 85degC environment and stored for 8 hours. After the lithium-ion battery is cooled to room temperature, a thickness T2 of the lithium-ion battery in this case is measured.
(4) Thickness expansion rate=T2/T1-1.

When the thickness expansion rate of the lithium-ion battery>10%, it is determined that the lithium-ion battery fails.

### 3. Test method of a capacity retention rate used when a lithium-ion battery is cycled for 400cls at room temperature

(1) A cycling test is performed on the lithium-ion battery at a rated current (rated power/rated voltage), and a capacity C1 at the first full discharge is recorded.
(2) When the lithium-ion battery is cycled 400 times, a discharge capacity C2 in this case is recorded.
(3) Capacity retention rate=C2/C1.

When the capacity retention rate used when the lithium-ion battery is cycled for 400cls at the room temperature <85%, it is determined that the lithium-ion battery fails.

### Test results:

Test results are shown in Table 1 and Table 2.

**Table 1**

| Sequence number | Positive electrode plate coating manner | First surface | Second surface | Area S₁ of a part, not covered by a positive electrode active substance layer, of the second surface/area S₂, of a part, covered by the positive electrode active substance layer, of the second surface |
|---|---|---|---|---|
| Comparative embodiment | Both-side coating | With coating | With coating | 0.05 |
| Embodiment 1 | Both-side coating | With coating | With coating | 0.05 |
| Embodiment 2 | Both-side coating | With coating | With coating | 0.05 |
| Embodiment 3 | Both-side coating | With coating | With coating | 0.05 |
| Embodiment 4 | Both-side coating | With coating | With coating | 0.05 |
| Embodiment 5 | Both-side coating | With coating | With coating | 0.05 |
| Embodiment 6 | Both-side coating | With coating | With coating | 0.05 |
| Embodiment 7 | Both-side coating | With coating | With coating | 0.07 |
| Embodiment 8 | Both-side coating | With coating | With coating | 0.09 |
| Embodiment 9 | Both-side coating | With coating | With coating | 0.05 |
| Embodiment 10 | Both-side coating | With coating | With coating | 0.05 |
| Embodiment | Both-side | With | With | 0.05 |
| 11 | coating | coating | coating | |
| Comparative embodiment 2 | Both-side coating | With coating | With coating | 0.05 |
| Embodiment 12 | Both-side coating | With coating | With coating | 0.05 |
| Embodiment 13 | Both-side coating | With coating | With coating | 0.05 |
| Embodiment 14 | Both-side coating | With coating | With coating | 0.05 |
| Comparative embodiment 3 | Both-side coating | With coating | With coating | 0.05 |
| Embodiment 15 | Both-side coating | With coating | With coating | 0.03 |
| Embodiment 16 | Single-side coating | With coating | Without coating | / |

**Table 2**

| Sequence number | Positive electrode plate | | Electrolyte | | | | a/c | b/c | a×b/ c | Lithium-ion battery | |
|---|---|---|---|---|---|---|---|---|---|---|---|
| | Content % of a Si element in an abnormal region of the positive electrode plate | Content % of a Si element in a positive electrode current collector (aluminu m foil) | Fluorinated solvent | | Imine compound | | | | | 85deg C storag e thickn ess expan sion rate | Capacit Y retentio n rate used when cycling is perform ed for 400cls at room temperat ure |
| | | | Type | Mass conte nt b% | Type | Mass conten tc% | | | | | |
| Comparati ve embodime nt 1 | 5.3 | 0.08 | Fluoroethy lene carbonate | 20.0 | Lithium bis(trifluoro methanesulp honyl)imide | 0 | - | - | - | 5.1% | 90% |
| Embodim ent 1 | 1.9 | 0.08 | Fluoroethy lene carbonate | 1.2 | Lithium bis(trifluoro methanesulp honyl)imide | 0.10 | 0.80 | 12.00 | 0.96 | 5.3% | 84% |
| Embodim ent 2 | 1.2 | 0.08 | Fluoroethy lene carbonate | 1.2 | Lithium bis(trifluoro methanesulphonyl)imide | 1.00 | 0.08 | 1.20 | 0.10 | 5.5% | 86% |
| Embodim ent 3 | 0.6 | 0.08 | Fluoroethy lene carbonate | 1.2 | Lithium bis(trifluoro methanesulp honyl)imide | 4.00 | 0.02 | 0.30 | 0.02 | 4.9% | 87% |
| Embodim ent 4 | 0.7 | 0.08 | Fluoroethy lene carbonate | 1.2 | Lithium bis(trifluoro methanesulp honyl)imide | 5.00 | 0.02 | 0.24 | 0.02 | 4.8% | 82% |
| Embodim ent 5 | 0.8 | 0.08 | Fluoroethy lene carbonate | 10.0 | Lithium bis(trifluoro methanesulp honyl)imide | 4.00 | 0.02 | 2.50 | 0.20 | 6.1% | 90% |
| Embodim ent 6 | 0.9 | 0.08 | Fluoroethy lene carbonate | 10.0 | Lithium bis(trifluoro methanesulp honyl)imide | 2.50 | 0.03 2 | 4.00 | 0.32 | 6.0% | 90% |
| Embodim ent 7 | 1.1 | 0.08 | Fluoroethy lene carbonate | 20.0 | Lithium bis(trifluoro methanesulp honyl)imide | 4.00 | 0.02 | 5.00 | 0.40 | 5.7% | 91% |
| Embodim ent 8 | 1.3 | 0.08 | Fluoroethy lene carbonate | 20.0 | Lithium bis(trifluoro methanesulp honyl)imide | 4.00 | 0.02 | 5.00 | 0.40 | 5.9% | 90% |
| Embodim ent 9 | 1.4 | 0.08 | Fluoroethy lene carbonate | 20.0 | Lithium bis(trifluoro methanesulp honyl)imide | 4.00 | 0.02 | 5.00 | 0.40 | 6.2% | 90% |
| Embodim ent 10 | 0.8 | 0.08 | Methyl fluoroform ate | 20.0 | Lithium bis(trifluoro methanesulp honyl)imide | 4.00 | 0.02 | 5.00 | 0.40 | 5.6% | 90% |
| Embodim ent 11 | 0.9 | 0.08 | Fluoroethy lene carbonate | 20.0 | Trifluorome thanesulfon amide | 4.00 | 0.02 | 5.00 | 0.40 | 5.5% | 90% |
| Embodim ent 12 | 1.8 | 0.08 | Fluoroethy lene carbonate | 50.0 | Lithium trifluoromethanesulfoni mide | 4.00 | 0.02 | 12.50 | 1.00 | 12.0% | 90% |
| Comparati ve embodime nt 2 | 4.3 | 0.14 | Fluoroethy lene carbonate | 10.0 | Lithium trifluoromet hanesulfoni mide | 0.14 | 1.00 | 71.43 | 10.0 0 | 5.1% | 90% |
| Embodim ent 13 | 1.8 | 0.14 | Fluoroethy lene carbonate | 10.0 | Lithium trifluoromet hanesulfoni mide | 0.18 | 0.78 | 55.56 | 7.78 | 5.3% | 90% |
| Embodim ent 14 | 0.5 | 0.14 | Fluoroethy lene carbonate | 10.0 | Lithium trifluoromet hanesulfoni mide | 0.80 | 0.18 | 12.50 | 1.75 | 5.5% | 90% |
| Embodim ent 15 | 0.4 | 0.14 | Fluoroethy lene carbonate | 12.0 | Lithium trifluoromet hanesulfoni mide | 0.18 | 0.78 | 66.67 | 9.33 | 4.9% | 90% |
| Comparati ve embodime nt 3 | 3.6 | 0.14 | Fluoroethy lene carbonate | 14.5 | Lithium trifluoromet hanesulfoni mide | 0.18 | 0.78 | 80.56 | 11.2 8 | 5.5% | 90% |
| Embodim ent 15 | 1.9 | 0.08 | Fluoroethy lene carbonate | 20.0 | Lithium trifluoromet hanesulfoni mide | 4 | 0.02 | 5.00 | 0.40 | 5.2% | 90% |
| Embodim ent 16 | 0.9 | 0.08 | Fluoroethy lene carbonate | 20.0 | Lithium trifluoromet hanesulfoni mide | 4 | 0.02 | 5.00 | 0.40 | 5.0% | 90% |

In Table 2, the content % of the Si element in the positive electrode current collector (aluminum foil) is equivalent to a%.

The content of the Si element in the abnormal region of the positive electrode plate refers to a content of a Si element in the region obtained through a test on a lithium-ion battery after charging and discharging cycles.

The electrolyte in the comparative embodiment 1 does not introduce the imine compound, and a silicon-containing product generated in a side reaction between the silicon element in the positive electrode current collector and the fluorinated solvent cannot be decomposed efficiently, causing an increase in abnormality of the positive electrode plate, and failure of the battery. Compared with the comparative embodiment 1, the organoimine compound is introduced into the electrolyte of embodiments 1-16, and by setting 0<a/c<1 and 0<b/c<80, a silicon-containing product generated in a side reaction between the silicon element in the positive electrode current collector and the fluorinated solvent can be dissolved in the electrolyte, thereby reducing abnormality of the positive electrode plate and improving high-temperature storage performance and cycling performance of the lithium-ion battery. When 0.3≤a/c≤0.7 and 15≤b/c≤65, the electrochemical apparatus may have better cycling performance and high temperature storage performance.

When the contents of the imine compound, the fluorinated solvent, and the silicon element satisfy 0<a×b/c<10, the imine compound can further dissolve the silicon-containing product in the electrolyte, thereby further enhancing the cycling performance and the high temperature storage performance of the electrochemical apparatus. When 1≤a×b/c≤9, the electrochemical apparatus has better cycling performance and high temperature storage performance.

When the mass content of the fluorinated solvent ranges from 0.10% to 50%, the fluorinated solvent can form a dense and uniform solid electrolyte interfacial film on the negative electrode plate, and protects the negative electrode plate well. When the mass content of the fluorinated solvent ranges from 3% to 30%, the electrochemical apparatus has better cycling performance and high temperature storage performance.

When the imine compound is added at a content of 0.1% to 5.0%, film-forming impedance becomes smaller, a polarization phenomenon of the lithium-ion battery is relieved, and the silicon-containing product generated in the side reaction can also be dissolved, thereby improving the cycling performance of the lithium-ion battery to a specific extent. In particular, when the imine compound is added at a content of 0.8% to 4.0%, the cycling performance of the lithium-ion battery can be improved even further.

Although the illustrative embodiments have been demonstrated and described, a person skilled in the art should understand that the above embodiments are not to be construed as a limitation of this application, and embodiments may be altered, substituted, and modified without departing from the principles, and scope of this application.

## Claims

1. An electrochemical apparatus, comprising a positive electrode plate, a negative electrode plate, and a separator disposed between the positive electrode plate and the negative electrode plate; the positive electrode plate comprising a positive electrode current collector and a positive electrode active substance layer disposed on a surface of the positive electrode current collector, wherein the positive electrode current collector comprises a silicon element; and based on a mass of the positive electrode current collector, a mass content of the silicon element is a%;
the electrochemical apparatus further comprises an electrolyte, the electrolyte comprises a fluorinated solvent and an imine compound; based on a mass of the electrolyte, a mass content of the fluorinated solvent is b% and a mass content of the imine compound is c%; wherein 0<a/c< 1 and 0<b/c<80.

2. The electrochemical apparatus according to claim 1, wherein 0.3≤a/c≤0.7, and/or 15<b/c<65.

3. The electrochemical apparatus according to claim 1 or 2, wherein 0<a×b/c<10; and preferrably, 1≤a×b/c≤9.

4. The electrochemical apparatus according to any one of claims 1 to 3, wherein the electrochemical apparatus satisfies at least one of conditions (1) to (3):
(1) 0.03≤a≤0.18, and preferrably, 0.06≤a≤0.15;
(2) 0.10≤b≤50, and preferrably, 3≤b≤30; or
(3) 0.1≤c≤5.0, and preferrably, 0.8≤c≤4.0.

5. The electrochemical apparatus according to any one of claims 1 to 4, wherein the fluorinated solvent comprises a fluorocarbonate; wherein the fluorocarbonate comprises at least one of fluoroethylene carbonate, fluoropropylene carbonate, diethyl fluorocarbonate, difluoroethylene carbonate, bis(trifluoromethyl) carbonate, carbonic acid bis(pentafluoroethyl) carbonate, or bis(2,2,2-trifluoroethyl) carbonate.

6. The electrochemical apparatus according to any one of claims 1 to 5, wherein the fluorinated solvent comprises a fluorocarboxylate; wherein the fluorocarboxylate comprises at least one of methyl fluoroformate, ethyl fluoroformate, ethyl fluoroacetate, or propyl fluoroacetate.

7. The electrochemical apparatus according to any one of claims 1 to 6, wherein the imine compound comprises a compound shown in formula (I): 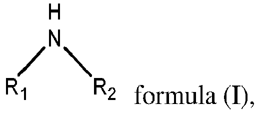 wherein
in formula (I), R₁ and R₂ are each independently selected from substituted or unsubstituted C1-C10 chain or cyclic alkyl, substituted or unsubstituted C2-C10 chain or cyclic alkenyl, substituted or unsubstituted C2-C10 chain or cyclic alkynyl, or substituted or unsubstituted C1-C10 acyl or sulfonyl; and when substitution is performed, a substituent is a halogen atom.

8. The electrochemical apparatus according to any one of claims 1 to 7, wherein the imine compound comprises a compound shown in formula (II): 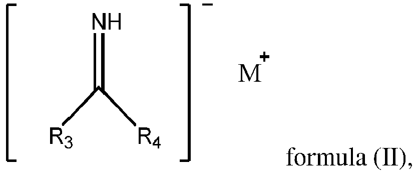 wherein
in formula (II), R₃ and R₄ are each independently selected from substituted or unsubstituted alkyl, or substituted or unsubstituted cyclic alkyl, and when substitution is performed, a substituent is a halogen atom, wherein preferrably, R₃ and R₄ are each independently selected from substituted or unsubstituted C₁ to C₂₀ alkyl, or substituted or unsubstituted C₁ to C₂₀ cyclic alkyl; and
M is selected from a sodium atom, a lithium atom, or a potassium atom.

9. The electrochemical apparatus according to any one of claims 1 to 8, wherein the imine compound comprises at least one of bis(trifluoromethane)sulfonimide, trifluoromethanesulfonamide, N,N-bis(pentafluoroethanesulfonyl)imide, dimethanesulfonamide, bistrifluoroacetamide, 2,2,2-trifluoro-N-(2,2,2-trifluoroethyl)acetamide, 2,2,2-trifluoro-N-(1-methylethyl)acetamide, 2,2,2-trifluoro-N-isopropylacetamide, magnesium bis(trifluoromethanesulfonyl)imide, 2-(trifluoroacetamido)ethanamine hydrochloride, lithium bis(fluorosulfonyl)imide LiN(SO₂F₂)₂, lithium bis(trifluoromethanesulphonyl)imide LiN(SO₂CF₃)₂, lithium bis(trifluoromethylsulfonyl)imide LiN(CF₃SO₂)₂, or lithium bis(fluorophosphate)imide LiN(POF₂)₂.

10. The electrochemical apparatus according to any one of claims 1 to 9, wherein a molar concentration of the fluorine-containing lithium salt is N mol/L, wherein 0.8≤N≤1.4.

11. The electrochemical apparatus according to any one of claims 1 to 10, wherein the positive electrode active substance layer is disposed on one surface of a positive electrode current collector.

12. The electrochemical apparatus according to any one of claims 1 to 11, wherein the positive electrode active substance layer is disposed on two surfaces, opposite to each other in a thickness direction of the positive electrode current collector and the positive electrode active substance layer covers a part of the two surfaces.

13. The electrochemical apparatus according to claim 12, wherein the two surfaces comprise a first surface and a second surface, the positive electrode active substance layer is disposed on the first surface, and the positive electrode active substance layer is disposed on a part of the second surface, wherein
an area of a part not covered by the positive electrode active substance layer, of the second surface is S₁ µm²;
an area of a part covered by the positive electrode active substance layer of the second surface is S₂ µm²; wherein S₁/S₂≥0.03.

14. The electrochemical apparatus according to claim 13, wherein 0.05≤S₁/S₂≤0.1.

15. An electronic apparatus, comprising the electrochemical apparatus according to any one of claims 1 to 14.
